# EUROPEAN PATENT SPECIFICATION

(11) **EP 1 625 366 B1**
(45) Date of publication and mention of the grant of the patent: **23.10.2019**
(21) Application number: 03736665.5
(22) Date of filing: 21.05.2003
(51) Int. Cl.: G01F 25/00, G01F 1/84

(54) **FLOW METER MONITORING AND DATA LOGGING SYSTEM**
VERFAHREN ZUR ÜBERWACHUNG UND DATENAUFZEICHNUNG EINES DURCHFLUSSMESSERS
SYSTEME D'ENREGISTREMENT DE DONNEES ET DE SURVEILLANCE DE DEBITMETRE

(43) Date of publication of application: 15.02.2006
(73) Proprietor: Micro Motion, Inc., Boulder, CO 80301 (US)
(72) Inventor: WALKER, Jeffrey, S., Broomfield, CO 80020 (US); ADAMS, Robert, E., Boulder, CO 80301 (US); HAYS, Paul, J., Lafayette, CO 80026 (US); GRONLIE, Neal, B., Estes Park, CO 80517 (US)
(74) Representative: Ellis, Christopher Paul
(86) International application number: PCT/US2003/016043
(87) International publication number: WO 2004/106868

(56) References cited:
- EP-A- 1 298 421
- JP-A- H09 170 932
- US-A- 5 594 180
- US-A1- 2002 117 009
- ANONYMOUS: "Workbench pc for windows" STRAWBERRY TREE, [Online] 10 April 1998 (1998-04-10), pages 1-7, XP002269464 Retrieved from the Internet: <URL:http://www.adeptscience.co.uk/product s/dataacqu/streeboards/assets/images/5wbfw .pdf> [retrieved on 2004-02-05]
- ANONYMOUS: "Gage Resolution" GAGE APPLIED SCIENCES INC., [Online] vol. 1, March 1994 (1994-03), pages 1-8, XP002269465 Retrieved from the Internet: <URL:http://www.gage-applied.com/ftpsite/n ewslett/res9403.pdf> [retrieved on 2004-02-05]

## Description

### Background of the Invention

### Field of the Invention

The invention is related to the field of monitoring a flow meter, and in particular, capturing flow meter output according to predetermined triggering conditions.

US5594180 discloses a method of monitoring a flow meter relevant to the present invention.

### Statement of the Problem

Flow meters are used to measure the mass flow rate, density, and other information for flowing materials. The flowing materials can include liquids, gases, combined liquids and gases, solids suspended in liquids, and liquids including gases and suspended solids. For example, flow meters are widely used in the well production and refining of petroleum and petroleum products. A flow meter can be used to determine well production by measuring a flow rate (i.e., by measuring a mass flow through the flow meter), and can even be used to determine the relative proportions of the gas and liquid components of a flow.

One problem that can occur in the meter output is an erroneous reading generated by sudden changes in the material. For example, if a liquid is being transferred and bubbles of gas are trapped in the liquid, the resulting large changes in mass flow rate in the flow meter due to the gas bubbles can cause large and inaccurate variations in the meter output. Similarly, the meter output can be degraded due to rapid changes in pressure, temperature, flow velocity, etc. Moreover, different materials can react differently to ambient conditions. Therefore, it is common for an operator to calibrate or configure a flow meter not only according to the material being transferred, including percentages of liquid, solids, and gases in the material, but also according to ambient conditions such as temperature, atmospheric pressure, flow pressure of the material, etc.

One prior art approach to monitoring a flow meter output is to detect an error (such as a large variation in drive gain) and capture meter output after the error has occurred. The drawback of this approach is that although the error condition may be captured, the meter events and flow conditions leading up to the error condition are not captured. An operator therefore may not be able to determine the cause of the problem, and remedial action cannot be determined or carried out.

A second prior art approach is to capture all meter output and store it in the event of an error condition. The data will enable an operator to review and diagnose the meter operation and/or flow conditions that led to the error. However, this approach also has drawbacks. The storage capacity needed to continuously and completely monitor a flow meter in operation would need to be large. The storage capacity needed to monitor multiple flow meters could become prohibitive. The storage capacity therefore is costly. In addition, the operator time would be expensive, as the operator would have to review large amounts of data in order to find the pertinent signals that occurred before the error condition.

### Summary of the Solution

The invention helps solve the above problems with monitoring a flow meter output.

A method of monitoring a flow meter is provided according to claim 1.

A flow meter monitoring system (400) is provided according to an embodiment of the invention as defined by the appended claim 8.

A flow meter monitoring software product for monitoring a flow meter is provided according to an embodiment of the invention as defined by the appended claim 18.

The following sets forth aspects of the invention. One aspect of the invention comprises capturing the flow meter output in the error log for a predetermined time period after the predetermined start triggering condition is detected.

According to the invention, a predetermined end triggering condition is detected in the flow meter output and the capturing reverts to capturing the flow meter output into the pre-error memory after the predetermined end triggering condition is detected.

In yet another aspect of the invention, hysteresis exists between the predetermined start triggering condition and the predetermined end triggering condition.

In yet another aspect of the invention, a meter identifier is stored in the error log, with the meter identifier corresponding to and identifying the flow meter generating the flow meter output.

In yet another aspect of the invention, an alarm condition is set when the predetermined start triggering condition is detected.

In yet another aspect of the invention, the flow meter comprises a Coriolis flow meter.

### Description of the Drawings

The same reference number represents the same element on all drawings.
FIG. 1 is a flowchart of a method of monitoring a flow meter according to an embodiment of the invention;
FIG. 2 is a graph of a representative flow meter output obtained from a flow meter;
FIG. 3 is a flowchart of a method of monitoring a flow meter according to another embodiment not being part of the invention;
FIG. 4 is a block diagram of a flow meter monitoring system according to an embodiment of the invention; and
FIG. 5 is a block diagram of a pre-error memory according to an embodiment of the invention.

### Detailed Description of the Invention

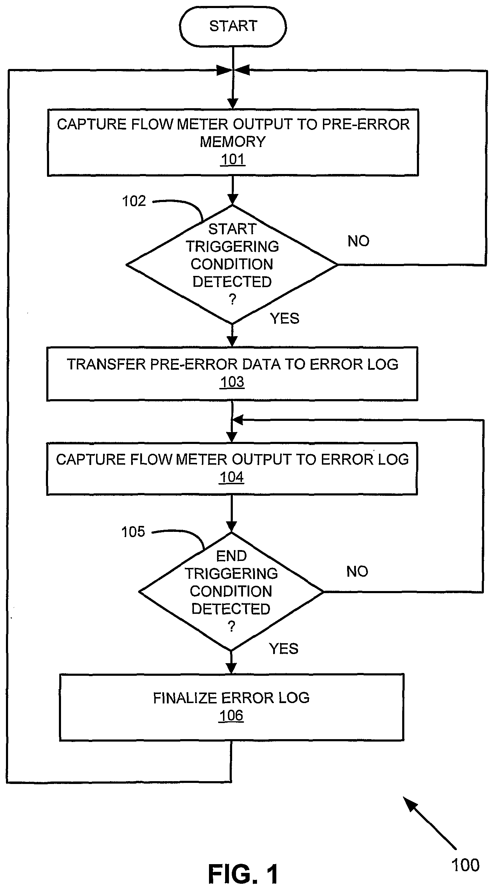

FIGS. 1-5 and the following description depict specific examples of the invention to teach those skilled in the art how to make and use the best mode of the invention. For the purpose of teaching inventive principles, some conventional aspects of the invention have been simplified or omitted. Those skilled in the art will appreciate variations from these examples that fall within the scope of the invention as defined by the claims. Those skilled in the art will appreciate that the features described below can be combined in various ways to form multiple variations of the invention. As a result, the invention is not limited to the specific examples described below, but only by the claims.

### Flow Meter Monitoring Method - FIG. 1

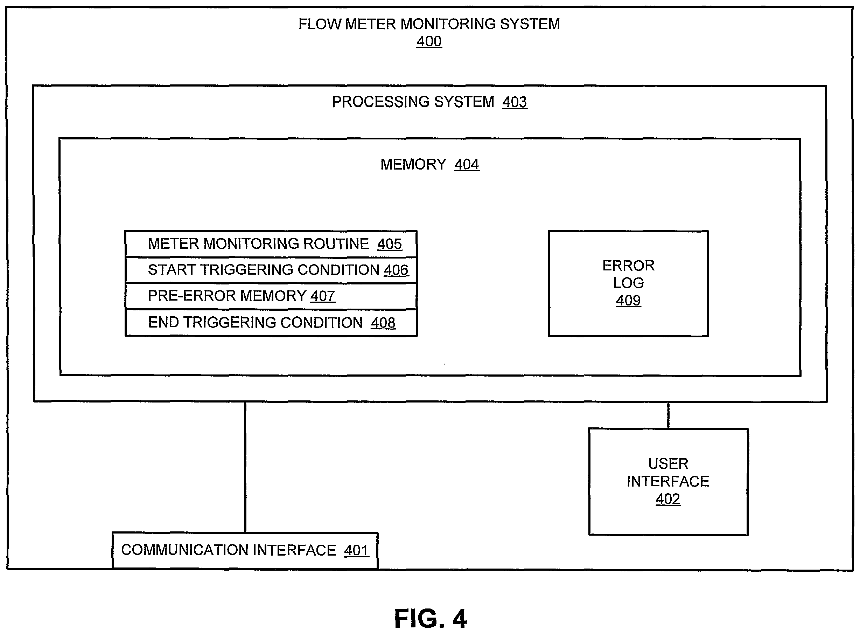

FIG. 1 is a flowchart 100 of a method of monitoring a flow meter according to an embodiment of the invention. The method can be performed by a flow meter monitoring system 400, for example (see FIG. 4). In one embodiment, the method monitors a Coriolis flow meter. However, it should be understood that the method can monitor many types of flow meters, including magnetic flow meters, vortex flow meters, and ultrasonic flow meters, for example. The method can be used to monitor one or more flow meters, and is useful for not only detecting error conditions in a flow through a flow meter but also for troubleshooting the error condition and gathering data of flow meter operation leading up to the error condition. This pre-error information is very useful information for use in determining why the error condition happened.

In step 101, the flow meter output is captured to a pre-error memory. The flow meter output can include, among other things, a drive gain, a drive voltage, a drive frequency, a pickoff signals phase difference, a temperature of the material flowing through the flow meter, a tube amplitude of the flow meter, a density value, a mass flow rate value, a meter identifier, a flow calibration factor, a zero value (delta time between pickoffs), etc.

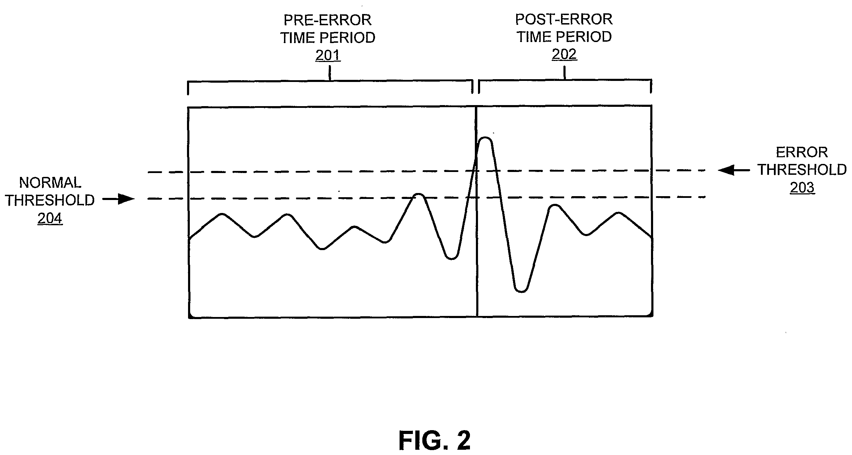

The capturing continuously overwrites a newest flow meter output from the flow meter over an oldest flow meter output data stored in the pre-error memory. The capturing therefore captures and temporarily stores a window of data (see the pre-error time period 201 of FIG. 2 and the accompanying discussion). This window of data can be permanently stored upon the occurrence of an error in the flow meter output. The predetermined time period may be chosen in order to make capture of pre-error data most likely. In this manner, the flow meter output leading up to an error condition can be captured and saved, as will be discussed further below.

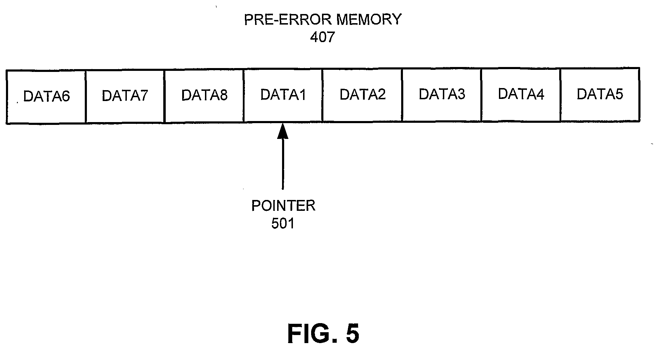

In one embodiment, the pre-error memory comprises a circular buffer (see FIG. 5 and the accompanying discussion). In another embodiment, the pre-error memory comprises a linked list. Other pre-error memory configurations can be employed.

In step 102, the method compares the flow meter output to a start triggering condition. An error condition exists if the flow meter output exceeds the start triggering condition. The start triggering condition can include, for example, a drive gain error threshold, a phase difference error threshold, a drive gain rate of change threshold, a mass flow delta error threshold, a date/time, a number of occurrences of a predetermined flow meter output value (*i.e.,* three occurrences of an abnormal drive gain value, for example), or any desired error criterion or combination of error criteria.

The drive gain error threshold can comprise, for example, a drive gain amplitude threshold, a drive gain amplitude delta threshold, a drive gain frequency threshold, or a drive gain frequency delta threshold. The phase difference error threshold can comprise, for example, a pickoff phase difference threshold or a pickoff phase difference delta threshold (*i.e.,* an excessive or unexpected rate of change in phase between pickoff signals). It should be understood that the start triggering condition can comprise various combinations of any of the above error conditions.

In one embodiment, a user of a flow meter monitoring system can choose and set the start triggering condition, and the start triggering condition can be selected according to local conditions or know local error propensities. If a start triggering condition is detected, the monitoring has detected an error condition in the flow meter output and the method proceeds to step 103; otherwise, the method loops back to step 101 until an error condition is detected.

In one embodiment, the start triggering condition is detected by comparing the flow meter output to a comparison threshold. In another embodiment, the start triggering condition is detected by inputting the flow meter output into a bucket filter. The bucket filter separates signals into discrete buckets, representing various signal levels. The bucket filter generates an output for a particular bucket when a predetermined amount of bucket inputs are received in that bucket (*i.e.,* the bucket generates an output when the bucket overflows). In another embodiment, the start triggering condition is detected by inputting the flow meter output into a trending filter. The trending filter generates a trend output that overlooks substantially one-time variations in the flow meter output, and generates an error signal if the flow meter output trends above the predetermined start triggering condition.

In step 103, the pre-error memory data captured to the pre-error memory during step 101 is transferred to an error log. The error log can be pre-existing or can be created in this step. In addition, the error log can be located in a flow meter monitoring system performing the instant method, or can be external to the flow meter monitoring system. For example, the flow meter monitoring system 400 can transmit the pre- and post-error data to a remote site, such as over the Internet, for example. The error log can include other information, including other flow meter data, such as an ambient temperature, a meter identifier, etc.

In step 104, the flow meter output is captured directly to the error log. Here, the error condition has occurred and post-error data is being captured (see the post-error time period 202 of FIG. 2).

In additional actions, an alarm condition can be set and an error indicator or error timestamp can be saved to the error log. Moreover, the flow meter monitoring system can use a historical data, such as an average mass flow rate and/or average density of the pre-error time period 201, in substitution for the flow meter output.

In step 105, the method compares the flow meter output to an end triggering condition. The error condition has ceased if the flow meter output is less than the end triggering condition. The end triggering condition can be, for example, a drive gain normal operation threshold (see FIG. 2), a phase difference normal operation threshold, a drive gain rate of change threshold, or any desired normal operation criterion.

The drive gain normal threshold can comprise, for example, a drive gain amplitude threshold, a drive gain amplitude delta threshold, a drive gain frequency threshold, or a drive gain frequency delta threshold. The phase difference normal threshold can comprise, for example, a pickoff phase difference threshold or a pickoff phase difference delta threshold. It should be understood that the end triggering condition can comprise various combinations of any of the above normal conditions.

In one embodiment, the user of the flow meter monitoring system can choose and set the end triggering condition, and the end triggering condition can be selected according to local conditions or know local error propensities. If an end triggering condition is detected, the monitoring has detected the termination of the error condition and the method proceeds to step 106; otherwise, the method loops back to step 104 until the end of the error condition is detected.

In step 106, the end of the error condition has been detected and the method finalizes the error log. This can include storing additional data in the error log, such as a time stamp, inserting a meter identifier that corresponds to and identifies the flow meter, etc. The error log now includes both the pre-error data and a segment of post-error data. The size of the pre-error data is generally fixed, but the size of the post-error data in this method embodiment depends on the duration of the error condition.

In summary, this method embodiment continuously buffers the flow meter output until an error condition is detected, whereupon the buffer of pre-error data is saved to an error log. The method also captures post-error data to the error log until an end of the error condition is detected.

### Flow Meter Output - FIG. 2

FIG. 2 is a graph of a representative flow meter output obtained from a flow meter. The flow meter output can represent a drive signal, a drive frequency, a pickoff phase difference, etc. Two distinct time periods are represented in the figure, a pre-error time period 201 and a post-error time period 202. A detected error condition causes a transition between the two time periods, and is detected according to the error threshold 203. When the error condition is detected, the flow meter monitoring switches to a post-error monitoring as represented by the post-error time period 202. In one embodiment, when the flow meter output drops back below a normal threshold 204, the monitoring reverts to capturing the flow meter output in the pre-error memory 407.

It can be seen from the figure that in one embodiment the normal threshold 204 and the error threshold 203 are chosen so as to include hysteresis, wherein the flow meter output must drop a predetermined amount below the error threshold 203 before the flow meter output is judged to be normal again. This prevents oscillating between error and non-error states.

It can be seen from the figure that anomalies may exist in the signal leading up to the detection of the error condition (*i.e.,* in the pre-error time period 201). This pre-error data may be very helpful and necessary in diagnosing and/or understanding the flow meter output. In addition, the pre-error data can be useful for calibrating the flow meter, for preventing future error conditions, etc. Moreover, the post-error signal may also be useful for diagnosing and preventing error conditions.

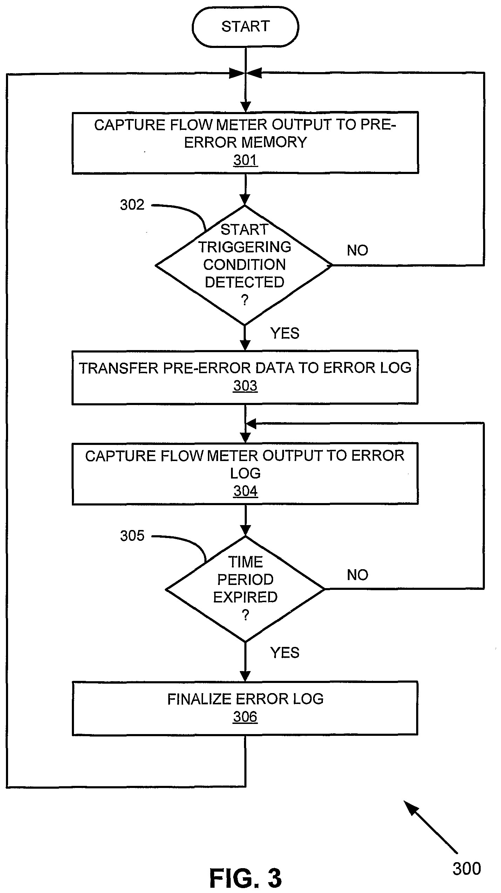

### Meter Monitoring Method - FIG. 3

FIG. 3 is a flowchart 300 of a method of monitoring a flow meter according to another embodiment not being part of the invention. In step 301, the flow meter output is captured to a pre-error memory, as previously discussed.

In step 302, the method compares the flow meter output to the start triggering condition, as previously discussed.

In step 303, the pre-error memory data captured during step 101 is transferred to an error log, as previously discussed.

In step 304, the flow meter output is captured directly to the error log, as previously discussed.

In step 305, the method checks to see if a predetermined monitoring time period has expired. The predetermined monitoring time period can be monitored by a timer, for example In one embodiment not being part of the invention, the user of the flow meter monitoring system can choose and/or set the predetermined monitoring time period, and the predetermined monitoring time period can be set according to local conditions or know local error propensities. When the predetermined monitoring time period expires, the post-error monitoring stops and the method proceeds to step 306; otherwise, the method loops back to step 304 until the predetermined monitoring time period expires. Consequently, the duration of the post-error time period 202 is controlled by the predetermined monitoring time period.

Alternatively, this method embodiment could test for a number of memory units saved to the error log (409) (*i.e.,* a post-error memory size), and could stop saving the flow . meter output to the error log (409) when a size limit is met. In another alternative, the method could apply both an end triggering condition and a timer, and the post-error time period 202 could be ended by either an end triggering condition or timer expiration.

In step 306, the end of the error condition has been detected, and the method finalizes the error log, as previously discussed.

In summary, this method embodiment not being part of the invention continuously buffers the flow meter output until an error condition is detected, whereupon the buffer of pre-error data is saved to an error log. The method captures post-error data to the error log for a predetermined monitoring time period.

### Flow Meter Monitoring System - FIG. 4

FIG. 4 is a block diagram of a flow meter monitoring system 400 according to an embodiment of the invention. The flow meter monitoring system 400 can include a communication interface 401, a user interface 402, and a processing system 403. The processing system 403 can include a memory 404 that includes a meter monitoring routine 405, a start triggering condition 406, a pre-error memory 407, an end triggering condition 408, and an error log 409.

In operation, the flow meter monitoring system 400 receives flow meter output via the communication interface 401. The processing system 403 performs the monitoring of the flow meter output and captures the flow meter output to either the pre-error memory 407 or to the error log 409, depending on whether an error condition has been detected in the flow meter output.

It should be understood that the flow meter monitoring system 400 can monitor the flow meter outputs of one or more flow meters, including one or more Coriolis flow meters. The flow meter monitoring system 400 can therefore include multiple pre-error memories and multiple error logs. Only one pre-error memory and one error log are shown for the purpose of clarity.

The communication interface 401 is any device capable of communicating with one or more flow meters. In addition, the communication interface 401 can enable communications over telephone systems and/or digital data networks. Consequently, the flow meter monitoring system 400 can communicate with remote flow meters, remote memory media, and/or remote users.

The user interface 402 processes user inputs and outputs. The user interface 402 allows users to set start triggering conditions and set end triggering conditions. In addition, the user interface 402 enables users to review captured data and perform other operations.

The user interface 402 can include an input portion that can comprise a keyboard or keypad, mouse, joystick or other pointing device, etc. In addition, the user interface 402 can include an output portion that includes a screen or other display. Alternatively, the user interface 402 can comprise a touchscreen. In yet another alternative, the user interface 402 can comprise a computer device in communication with the flow meter monitoring system 400.

The processing system 403 conducts operations of the flow meter monitoring system 400. The processing system 403 can comprise a general purpose computer, a microprocessing system, a logic circuit, or some other general purpose or customized processing device. The processing system 403 can be distributed among multiple processing devices. The processing system 403 can include any manner of integral or independent electronic storage medium, such as the memory system 404.

The meter monitoring routine 405, when executed by the processing system 403, configures the processing system 403 to capture a flow meter output into the pre-error memory 407 (with the flow meter output overwriting an oldest flow meter output data in the pre-error memory 407), and detect a predetermined start triggering condition in the flow meter output. When the predetermined start triggering condition is detected, the processing system 403 is configured to transfer a pre-error memory data into the error log 409 and capture the flow meter output in the error log 409.

In one embodiment, the meter monitoring routine 405 comprises data and instructions that are incorporated into a software platform, such as ProLink II. ProLink is software for communicating with flow meters and logging flow meter output, and is available from Micro Motion Inc. of Boulder, Colorado. ProLink is just one useful software platform, and the meter monitoring can be implemented in any suitable software language or platform.

The start triggering condition 406 stores one or more start triggering Conditions that are used by the meter monitoring routine 405 to determine when an error condition exists. The start triggering condition 406 can include, for example, an error drive gain amplitude threshold, an error drive gain amplitude delta threshold, an error drive gain frequency threshold, an error drive gain frequency delta threshold, an error pickoff frequency phase difference threshold, an error pickoff phase difference delta threshold (*i.e.,* an excessive or unexpected rate of change in phase between pickoff signals), etc., and can include various combinations of error conditions.

The pre-error memory 407 captures flow meter output when normal operation of the flow meter is occurring. During the capturing, the pre-error memory 407 continuously receives a new flow meter output and overwrites the new flow meter output over an oldest flow meter output stored in the pre-error memory 407. The flow meter output is therefore continuously captured, and the amount of flow meter output stored in the pre-error memory 407 is determined by the size of the pre-error memory 407. In one embodiment, a user can select a size of a pre-error memory 407 for a particular flow meter, and can therefore designate how large of a window of time of pre-error flow meter output is captured.

In one embodiment, the flow meter output is captured as digitized data. The amount of flow meter output in the pre-error memory 407 may therefore be determined by not only the size of the pre-error memory 407 but also by the type of digitization (*i.e.,* by the sampling rate and the number of bits of resolution, for example).

The end triggering condition 408 stores one or more end triggering conditions that are used by the meter monitoring routine 405 to determine when a normal operation is present and/or when error conditions cease to exist in the flow meter output. The end triggering condition 408 can include, for example, a normal drive gain amplitude threshold, a normal drive gain amplitude delta threshold, a normal drive gain frequency threshold, a normal drive gain frequency delta threshold, a normal pickoff frequency phase difference threshold, a normal pickoff phase difference delta threshold (*i.e*., a normal or expected rate of change in phase between pickoff signals), etc., and can include various combinations of conditions.

The error log 409 receives the pre-error memory data from the pre-error memory 407 when an error condition is detected (*i.e.,* when the processing system 403 matches one or more start triggering conditions to data in the flow meter output). In addition, the flow meter output can be captured to the error log 409 for a period of time after the error condition. In this manner, the error log 409 is used to store flow meter output occurring both before and after the error condition, and therefore the error log 409 stores valuable data that can be used to predict, diagnose, and address error conditions in a flow meter.

The error log 409 can be a memory medium located in the flow meter monitoring system 400, or can be a remote memory medium. For example, if the error log 409 is a local memory medium, the error log 409 can comprise a solid state memory, a magnetic memory, an optical memory, etc. Alternatively, the error log 409 can be located on a remote device, such as a remote database, wherein the flow meter monitoring system 400 sends flow meter output to the error log 409 over a telephone line, wireless link, or computer network (such as the Internet, for example).

The flow meter monitoring system 400 can comprise a custom device. Alternatively, the flow meter monitoring system 400 can comprise a general purpose computer configured for flow meter output monitoring by software.

### Pre-Error Memory - FIG. 5

FIG. 5 is a block diagram of the pre-error memory 407 according to an embodiment of the invention. In this embodiment, the pre-error memory 407 comprises a circular buffer, including a read/write pointer 501. The read/write pointer 501 is used to substantially continuously write a newest flow meter output from the flow meter into the pre-error memory 407, and is also used to read data out of the pre-error memory 407. A circular buffer is one memory embodiment that accomplishes this goal.

In use, the read/write pointer 501 is incremented every time flow meter output is written to the pre-error memory 407. The pre-error memory 407 can save the flow meter output as a byte or bytes of digital data, and the read/write pointer 501 is incremented according to the size of the flow meter output data being saved. When an error condition is detected, the contents of the pre-error memory 407 are read out, starting at the read/write pointer 501 and ending at the memory location of the read/write pointer minus one memory unit (*i.e*., reading data D1-D8, in that order).

### Benefits of the Invention

Advantageously, the flow meter monitoring according to the invention enables capture of flow meter output both before and after an error condition occurs. This enables the review of conditions and operation of the flow meter leading up to the error condition, as well as the conditions and operation of the flow meter after the error condition. In addition, the pre-error conditions can be compared to post-error conditions. Moreover, the pre-error and post-error data can be used to predict errors, and can be used to calibrate, optimize, and/or adjust operation of the flow meter.

The invention allows users to define various characteristics for data collection, including collecting high and/or low threshold-based and time-based event data to trigger upon, a number of occurrences of an event to trigger upon, a data rate of change of events to trigger upon, specify data to collect before and after the triggered event(s) occur, and specify statistical functions to perform on data within the data collection window. With this flexibility, the user can define characteristics of the flow meter output to be monitored, can collect only the desired or needed data, and can collect specific data for a pre-defined interval both before and after the conditions are met.

## Claims

1. A method of monitoring a flow meter, the method **characterized by** the steps of:
capturing a substantially continuous flow meter output into a pre-error memory (407), with the substantially continuous flow meter output overwriting an oldest flow meter output stored in the pre-error memory;
detecting a predetermined start triggering condition in the substantially continuous flow meter output;
transferring a pre-error memory data into an error log (409) when the predetermined start triggering condition is detected; and
capturing the substantially continuous flow meter output in the error log after the predetermined start triggering condition is detected;
detecting a predetermined end triggering condition in the substantially continuous flow meter output; and
reverting to capturing the substantially continuous flow meter output into the pre-error memory after the predetermined end triggering condition is detected, wherein the error log stores pre-error data and post-error data, with the post-error data comprising all flow meter output generated between the predetermined start triggering condition and the predetermined end triggering condition.

2. The method of claim 1, further comprising a preliminary step of accepting a user input that configures the predetermined start triggering condition.

3. The method of claim 1, with the capturing comprising capturing the substantially continuous flow meter output in the error log for a predetermined time period after the predetermined start triggering condition is detected.

4. The method of claim 1, further comprising a preliminary step of accepting a user input that configures the predetermined end triggering condition.

5. The method of claim 1, wherein hysteresis exists between the predetermined start triggering condition and the predetermined end triggering condition.

6. The method of claim 1, further comprising storing a meter identifier in the error log, with the meter identifier corresponding to and identifying the flow meter generating the substantially continuous flow meter output.

7. The method of claim 1, with the flow meter comprising a Coriolis flow meter.

8. A flow meter monitoring system (400), the system **characterized by**:
a communication interface (401) configured to receive substantially continuous flow meter output;
a pre-error memory (407);
an error log (409); and
a processing system (403) configured to:
communicate with the communication interface (401), the pre-error memory (407), and the error log (409);
capture the substantially continuous flow meter output into the pre-error memory (407), with the substantially continuous flow meter output overwriting an oldest flow meter output stored in the pre-error memory (407);
detect a predetermined start triggering condition in the substantially continuous flow meter output;
transfer a pre-error memory data from the pre-error memory (407) into the error log (409) when the predetermined start triggering condition is detected; and
capture the substantially continuous flow meter output into the error log (409) after the predetermined start triggering condition is detected;
detect a predetermined end triggering condition in the substantially continuous flow meter output; and
revert to capturing the flow meter output into the pre-error memory after the predetermined end triggering condition is detected, wherein the error log stores pre-error data and post-error data, with the post-error data comprising all flow meter output generated between the predetermined start triggering condition and the predetermined end triggering condition.

9. The flow meter monitoring system (400) of claim 8, wherein the predetermined start triggering condition (406) is stored in a memory (404) of the flow meter monitoring system (400).

10. The flow meter monitoring system (400) of claim 8, wherein the pre-error memory (407) is stored in a memory (404) of the flow meter monitoring system (400).

11. The flow meter monitoring system (400) of claim 8, wherein the error log (409) is stored in a memory (404) of the flow meter monitoring system (400).

12. The flow meter monitoring system (400) of claim 8, wherein the error log (409) is stored external to the flow meter monitoring system (400).

13. The flow meter monitoring system (400) of claim 8, wherein the predetermined start triggering condition is user-settable.

14. The flow meter monitoring system (400) of claim 8, wherein the processing system (403) is further configured to capture the substantially continuous flow meter output in the error log (409) for a predetermined time period after the predetermined start triggering condition is detected.

15. The flow meter monitoring system (400) of claim 8, wherein the predetermined end triggering condition is user-settable.

16. The flow meter monitoring system (400) of claim 8, wherein hysteresis exists between the predetermined start triggering condition and the predetermined end triggering condition.

17. The flow meter monitoring system (400) of claim 8, with the flow meter monitoring system (400) being configured to monitor a Coriolis flow meter.

18. A flow meter monitoring software product for monitoring a flow meter, the software product **characterized by**:
control software configured to:
direct a processing system to capture a substantially continuous flow meter output into a pre-error memory (407), with the substantially continuous flow meter output overwriting an oldest flow meter output stored in the pre-error memory;
detect a predetermined start triggering condition in the substantially continuous flow meter output;
transfer a pre-error memory data into an error log (409) when the predetermined start triggering condition is detected, and capture the substantially continuous flow meter output in the error log after the predetermined start triggering condition is detected;
detect a predetermined end triggering condition in the substantially continuous flow meter output;
revert to capturing the substantially continuous flow meter output into the pre-error memory after the predetermined end triggering condition is detected, wherein the error log stores pre-error data and post-error data, with the post-error data comprising all flow meter output generated between the predetermined start triggering condition and the predetermined end triggering condition; and a storage system that stores the control software.

## Patentansprüche

1. Verfahren zum Überwachen eines Durchflussmessers, wobei das Verfahren durch die folgenden Schritte gekennzeichnet ist:
Erfassen eines im Wesentlichen kontinuierlichen Durchflussmesserausgangs in einen Vor-Fehler-Speicher (407), wobei der im Wesentlichen kontinuierliche Durchflussmesserausgang einen im Vor-Fehler-Speicher gespeicherten ältesten Durchflussmesserausgang überschreibt;
Erkennen einer vorbestimmten Startauslösebedingung in dem im Wesentlichen kontinuierlichen Durchflussmesserausgang;
Übertragen von Vor-Fehler-Speicherdaten in ein Fehlerprotokoll (409), wenn die vorbestimmte Startauslösebedingung erkannt wird; und
Erfassen des im Wesentlichen kontinuierlichen Durchflussmesserausgangs im Fehlerprotokoll nach Erkennung der vorbestimmten Startauslösebedingung;
Erkennen einer vorbestimmten Endauslösebedingung in dem im Wesentlichen kontinuierlichen Durchflussmesserausgang; und
Zurückkehren zum Erfassen des im Wesentlichen kontinuierlichen Durchflussmesserausgangs in den Vor-Fehler-Speicher nach dem Erkennen der vorbestimmten Endauslösebedingung, wobei das Fehlerprogramm Vor-Fehler-Daten und Nach-Fehler-Daten speichert, wobei die Nach-Fehler-Daten alle zwischen der vorbestimmten Startauslösebedingung und der vorbestimmten Endauslösebedingung erzeugten Durchflussmesserausgänge umfassen.

2. Verfahren nach Anspruch 1, das ferner einen Vorabschritt des Akzeptierens einer Benutzereingabe beinhaltet, die die vorbestimmte Startauslösebedingung konfiguriert.

3. Verfahren nach Anspruch 1, wobei die Erfassung das Erfassen des im Wesentlichen kontinuierlichen Durchflussmesserausgangs im Fehlerprotokoll für eine vorbestimmte Zeitperiode nach dem Erkennen der vorbestimmten Startauslösebedingung beinhaltet.

4. Verfahren nach Anspruch 1, das ferner einen Vorabschritt des Akzeptierens einer Benutzereingabe beinhaltet, die die vorbestimmte Endauslösebedingung konfiguriert.

5. Verfahren nach Anspruch 1, wobei Hysterese zwischen der vorbestimmten Startauslösebedingung und der vorbestimmten Endauslösebedingung existiert.

6. Verfahren nach Anspruch 1, das ferner das Speichern einer Messgerätekennung im Fehlerprotokoll beinhaltet, wobei die Messgerätekennung dem den im Wesentlichen kontinuierlichen Durchflussmesserausgang erzeugenden Durchflussmesser entspricht und ihn identifiziert.

7. Verfahren nach Anspruch 1, wobei der Durchflussmesser einen Coriolis-Durchflussmesser umfasst.

8. Durchflussmessüberwachungssystem (400), wobei das System **gekennzeichnet ist durch**:
eine Kommunikationsschnittstelle (401), konfiguriert zum Empfangen von im Wesentlichen kontinuierlichen Durchflussmesserausgängen;
einen Vor-Fehler-Speicher (407);
ein Fehlerprotokoll (409); und
ein Verarbeitungssystem (403), konfiguriert zum:
Kommunizieren mit der Kommunikationsschnittstelle (401), dem Vor-Fehler-Speicher (407) und dem Fehlerprotokoll (409);
Erfassen des im Wesentlichen kontinuierlichen Durchflussmesserausgangs in den Vor-Fehler-Speicher (407), wobei der im Wesentlichen kontinuierliche Durchflussmesserausgang einen im Vor-Fehler-Speicher (407) gespeicherten ältesten Durchflussmesserausgang überschreibt;
Erkennen einer vorbestimmten Startauslösebedingung in dem im Wesentlichen kontinuierlichen Durchflussmesserausgang;
Übertragen von Vor-Fehler-Speicherdaten vom Vor-Fehler-Speicher (407) in das Fehlerprotokoll (409), wenn die vorbestimmte Startauslösebedingung erkannt wird; und
Erfassen des im Wesentlichen kontinuierlichen Durchflussmesserausgangs in das Fehlerprotokoll (409) nach dem Erkennen der vorbestimmten Startauslösebedingung;
Erkennen einer vorbestimmten Endauslösebedingung in dem im Wesentlichen kontinuierlichen Durchflussmesserausgang; und
Zurückkehren zum Erfassen des Durchflussmesserausgangs in den Vor-Fehler-Speicher nach dem Erkennen der vorbestimmten Endauslösebedingung, wobei das Fehlerprotokoll Vor-Fehler-Daten und Nach-Fehler-Daten speichert, wobei die Nach-Fehler-Daten alle zwischen der vorbestimmten Startauslösebedingung und der vorbestimmten Endauslösebedingung erzeugten Durchflussmesserausgänge umfassen.

9. Durchflussmesserüberwachungssystem (400) nach Anspruch 8, wobei die vorbestimmte Startauslösebedingung (406) in einem Speicher (404) des Durchflussmesserüberwachungssystems (400) gespeichert wird.

10. Durchflussmesserüberwachungssystem (400) nach Anspruch 8, wobei der Vor-Fehler-Speicher (407) in einem Speicher (404) des Durchflussmesserüberwachungssystems (400) gespeichert wird.

11. Durchflussmesserüberwachungssystem (400) nach Anspruch 8, wobei das Fehlerprotokoll (409) in einem Speicher (404) des Durchflussmesserüberwachungssystems (400) gespeichert wird.

12. Durchflussmesserüberwachungssystem (400) nach Anspruch 8, wobei das Fehlerprotokoll (409) außerhalb des Durchflussmesserüberwachungssystems (400) gespeichert wird.

13. Durchflussmesserüberwachungssystem (400) nach Anspruch 8, wobei die vorbestimmte Startauslösebedingung vom Benutzer eingestellt werden kann.

14. Durchflussmesserüberwachungssystem (400) nach Anspruch 8, wobei das Verarbeitungssystem (403) ferner zum Erfassen des im Wesentlichen kontinuierlichen Durchflussmesserausgangs im Fehlerprotokoll (409) für eine vorbestimmte Zeitperiode nach dem Erkennen der vorbestimmten Startauslösebedingung konfiguriert ist.

15. Durchflussmesserüberwachungssystem (400) nach Anspruch 8, wobei die vorbestimme Endauslösebedingung vom Benutzer eingestellt werden kann.

16. Durchflussmesserüberwachungssystem (400) nach Anspruch 8, wobei Hysterese zwischen der vorbestimmten Startauslösebedingung und der vorbestimmten Endauslösebedingung besteht.

17. Durchflussmesserüberwachungssystem (400) nach Anspruch 8, wobei das Durchflussmesserüberwachungssystem (400) zum Überwachen eines Coriolis-Durchflussmessers konfiguriert ist.

18. Durchflussmesserüberwachungs-Softwareprodukt zum Überwachen eines Durchflussmessers, wobei das SoftwareProdukt **gekennzeichnet ist durch**:
Steuersoftware, konfiguriert zum:
Anweisen eines Verarbeitungssystems zum Erfassen eines im Wesentlichen kontinuierlichen Durchflussmesserausgangs in einen Vor-Fehler-Speicher (407), wobei der im Wesentlichen kontinuierliche Durchflussmesserausgang einen im Vor-Fehler-Speicher gespeicherten ältesten Durchflussmesserausgang überschreibt;
Erkennen einer vorbestimmten Startauslösebedingung in dem im Wesentlichen kontinuierlichen Durchflussmesserausgang;
Übertragen von Vor-Fehler-Speicherdaten in ein Fehlerprotokoll (409), wenn die vorbestimmte Startauslösebedingung erkannt wird, und Erfassen des im Wesentlichen kontinuierlichen Durchflussmesserausgangs im Fehlerprotokoll nach dem Erkennen der vorbestimmten Startauslösebedingung;
Erkennen einer vorbestimmten Endauslösebedingung in dem im Wesentlichen kontinuierlichen Durchflussmesserausgang;
Zurückkehren zum Erfassen des im Wesentlichen kontinuierlichen Durchflussmesserausgangs in den Vor-Fehler-Speicher nach dem Erkennen der vorbestimmten Endauslösebedingung, wobei das Fehlerprotokoll Vor-Fehler-Daten und Nach-Fehler-Daten speichert, wobei die Nach-Fehler-Daten alle zwischen der vorbestimmten Startauslösebedingung und der vorbestimmten Endauslösebedingung erzeugten Durchflussmesserausgänge umfassen; und
ein Speichersystem, das die Steuersoftware speichert.

## Revendications

1. Procédé de surveillance d'un débitmètre, le procédé étant **caractérisé par** les étapes consistant à :
capturer un signal de sortie de débitmètre sensiblement continu dans une mémoire de type pré-erreur (407), le signal de sortie de débitmètre sensiblement continu écrasant un signal de sortie de débitmètre le plus ancien stocké dans la mémoire de type pré-erreur ;
détecter un état de déclenchement de début prédéterminé dans le signal de sortie de débitmètre sensiblement continu ;
transférer des données de mémoire de type pré-erreur dans un journal des erreurs (409) quand l'état de déclenchement de début prédéterminé est détecté ; et
capturer le signal de sortie de débitmètre sensiblement continu dans le journal des erreurs après la détection de l'état de déclenchement de début prédéterminé ;
détecter un état de déclenchement de fin prédéterminé dans le signal de sortie de débitmètre sensiblement continu ; et
revenir à l'étape consistant à capturer le signal de sortie de débitmètre sensiblement continu dans la mémoire de type pré-erreur après la détection de l'état de déclenchement de fin prédéterminé, dans lequel le journal des erreurs stocke des données de type pré-erreur et des données de type post-erreur, les données de type post-erreur comportant tous les signaux de sortie de débitmètre générés entre l'état de déclenchement de début prédéterminé et l'état de déclenchement de fin prédéterminé.

2. Procédé selon la revendication 1, comportant par ailleurs une étape préliminaire consistant à accepter une entrée d'utilisateur qui configure l'état de déclenchement de début prédéterminé.

3. Procédé selon la revendication 1, l'étape consistant à capturer comportant l'étape consistant à capturer le signal de sortie de débitmètre sensiblement continu dans le journal des erreurs pendant une période de temps prédéterminée après la détection de l'état de déclenchement de début prédéterminé.

4. Procédé selon la revendication 1, comportant par ailleurs une étape préliminaire consistant à accepter une entrée d'utilisateur qui configure l'état de déclenchement de fin prédéterminé.

5. Procédé selon la revendication 1, dans lequel une hystérésis existe entre l'état de déclenchement de début prédéterminé et l'état de déclenchement de fin prédéterminé.

6. Procédé selon la revendication 1, comportant par ailleurs l'étape consistant à stocker un identifiant de débitmètre dans le journal des erreurs, l'identifiant de débitmètre correspondant au, et identifiant le, débitmètre générant le signal de sortie de débitmètre sensiblement continu.

7. Procédé selon la revendication 1, le débitmètre comportant un débitmètre de Coriolis.

8. Système de surveillance de débitmètre (400), le système étant **caractérisé par** :
une interface de communication (401) configurée pour recevoir un signal de sortie de débitmètre sensiblement continu ;
une mémoire de type pré-erreur (407) ;
un journal des erreurs (409) ; et
un système de traitement (403) configuré pour :
communiquer avec l'interface de communication (401), la mémoire de type pré-erreur (407), et le journal des erreurs (409) ;
capturer le signal de sortie de débitmètre sensiblement continu dans la mémoire de type pré-erreur (407), le signal de sortie de débitmètre sensiblement continu écrasant un signal de sortie de débitmètre le plus ancien stocké dans la mémoire de type pré-erreur (407) ;
détecter un état de déclenchement de début prédéterminé dans le signal de sortie de débitmètre sensiblement continu ;
transférer des données de mémoire de type pré-erreur en provenance de la mémoire de type pré-erreur (407) dans le journal des erreurs (409) quand l'état de déclenchement de début prédéterminé est détecté ; et
capturer le signal de sortie de débitmètre sensiblement continu dans le journal des erreurs (409) après la détection de l'état de déclenchement de début prédéterminé ;
détecter un état de déclenchement de fin prédéterminé dans le signal de sortie de débitmètre sensiblement continu ; et
revenir à l'étape consistant à capturer le signal de sortie de débitmètre dans la mémoire de type pré-erreur après la détection de l'état de déclenchement de fin prédéterminé, dans lequel le journal des erreurs stocke des données de type pré-erreur et des données de type post-erreur, les données de type post-erreur comportant tous les signaux de sortie de débitmètre générés entre l'état de déclenchement de début prédéterminé et l'état de déclenchement de fin prédéterminé.

9. Système de surveillance de débitmètre (400) selon la revendication 8, dans lequel l'état de déclenchement de début prédéterminé (406) est stocké dans une mémoire (404) du système de surveillance de débitmètre (400).

10. Système de surveillance de débitmètre (400) selon la revendication 8, dans lequel la mémoire de type pré-erreur (407) est stockée dans une mémoire (404) du système de surveillance de débitmètre (400).

11. Système de surveillance de débitmètre (400) selon la revendication 8, dans lequel le journal des erreurs (409) est stocké dans une mémoire (404) du système de surveillance de débitmètre (400).

12. Système de surveillance de débitmètre (400) selon la revendication 8, dans lequel le journal des erreurs (409) est stocké de manière externe au système de surveillance de débitmètre (400).

13. Système de surveillance de débitmètre (400) selon la revendication 8, dans lequel l'état de déclenchement de début prédéterminé est en mesure d'être défini par l'utilisateur.

14. Système de surveillance de débitmètre (400) selon la revendication 8, dans lequel le système de traitement (403) est par ailleurs configuré pour capturer le signal de sortie de débitmètre sensiblement continu dans le journal des erreurs (409) pendant une période de temps prédéterminée après la détection de l'état de déclenchement de début prédéterminé.

15. Système de surveillance de débitmètre (400) selon la revendication 8, dans lequel l'état de déclenchement de fin prédéterminé est en mesure d'être défini par l'utilisateur.

16. Système de surveillance de débitmètre (400) selon la revendication 8, dans lequel une hystérésis existe entre l'état de déclenchement de début prédéterminé et l'état de déclenchement de fin prédéterminé.

17. Système de surveillance de débitmètre (400) selon la revendication 8, le système de surveillance de débitmètre (400) étant configuré pour surveiller un débitmètre de Coriolis.

18. Produit logiciel de surveillance de débitmètre servant à surveiller un débitmètre, le produit logiciel étant **caractérisé par** :
un logiciel de commande configuré pour :
amener un système de traitement à capturer un signal de sortie de débitmètre sensiblement continu dans une mémoire de type pré-erreur (407), le signal de sortie de débitmètre sensiblement continu écrasant un signal de sortie de débitmètre le plus ancien stocké dans la mémoire de type pré-erreur ;
détecter un état de déclenchement de début prédéterminé dans le signal de sortie de débitmètre sensiblement continu ;
transférer des données de mémoire de type pré-erreur dans un journal des erreurs (409) quand l'état de déclenchement de début prédéterminé est détecté, et capturer le signal de sortie de débitmètre sensiblement continu dans le journal des erreurs après la détection de l'état de déclenchement de début prédéterminé ;
détecter un état de déclenchement de fin prédéterminé dans le signal de sortie de débitmètre sensiblement continu ;
revenir à l'étape consistant à capturer le signal de sortie de débitmètre sensiblement continu dans la mémoire de type pré-erreur après la détection de l'état de déclenchement de fin prédéterminé, dans lequel le journal des erreurs stocke des données de type pré-erreur et des données de type post-erreur, les données de type post-erreur comportant tous les signaux de sortie de débitmètre générés entre l'état de déclenchement de début prédéterminé et l'état de déclenchement de fin prédéterminé ; et
un système de stockage qui stocke le logiciel de commande.
